# FASCICULE DE BREVET EUROPEEN

(11) **EP 2 406 462 B1**
(45) Date de publication et mention de la délivrance du brevet: **25.01.2017**
(21) Numéro de dépôt: 10707909.7
(22) Date de dépôt: 10.03.2010
(51) Int. Cl.: F01D 5/08, F01D 25/12, F02C 7/00, F02C 7/28

(54) **ELEMENT DE ROTOR AVEC UN PASSAGE DE FLUIDE ET UN ELEMENT D'OBTURATION DU PASSAGE, TURBOMACHINE COMPORTANT L'ELEMENT DE ROTOR**
ROTORELEMENT MIT EINEM FLUIDKANAL UND EINEM KANALSPERRGLIED SOWIE TURBOMOTOR MIT DEM ROTORELEMENT
ROTOR ELEMENT WITH A FLUID PASSAGE AND PASSAGE-BLOCKING MEMBER, AND TURBINE ENGINE INCLUDING THE ROTOR ELEMENT

(30) Priorité: 12.03.2009 FR 0951557
(43) Date de publication de la demande: 18.01.2012
(73) Titulaire: Safran Aircraft Engines, 75015 Paris (FR)
(72) Inventeur: ROUSSELIN, Stéphane, 77850 Hericy (FR)
(74) Mandataire: Gevers & Orès
(86) Numéro de dépôt international: PCT/EP2010/053055
(87) Numéro de publication internationale: WO 2010/103054

(56) Documents cités:
- EP-A- 1 211 381
- EP-A- 1 306 591
- FR-A- 2 884 867
- US-A- 3 575 528
- US-A- 3 712 756

## Description

L'invention concerne le domaine des turbomachines et vise la commande de la circulation d'un fluide à travers un élément de rotor en fonction de la vitesse de rotation de ce dernier. Elle vise plus particulièrement le refroidissement d'un rotor de turbine d'un moteur à turbine à gaz.

Un turboréacteur à soufflante avant et à double corps, par exemple, comprend un corps à basse pression, dit corps BP, et un corps à haute pression, dit corps HP.

Par convention, dans la présente demande, les termes « amont » et « aval » sont définis par rapport au sens de circulation de l'air dans le turboréacteur. Ainsi, un turboréacteur à double corps à soufflante avant comprend classiquement, d'amont en aval, une soufflante, un étage compresseur BP, un étage compresseur HP, une chambre de combustion, un étage de turbine HP et un étage de turbine BP.

Après combustion dans la chambre de combustion, le flux de gaz à très haute température est détendu dans les turbines. Les éléments de la turbine HP soumis à des températures très élevées sont parcourus par un fluide de refroidissement.

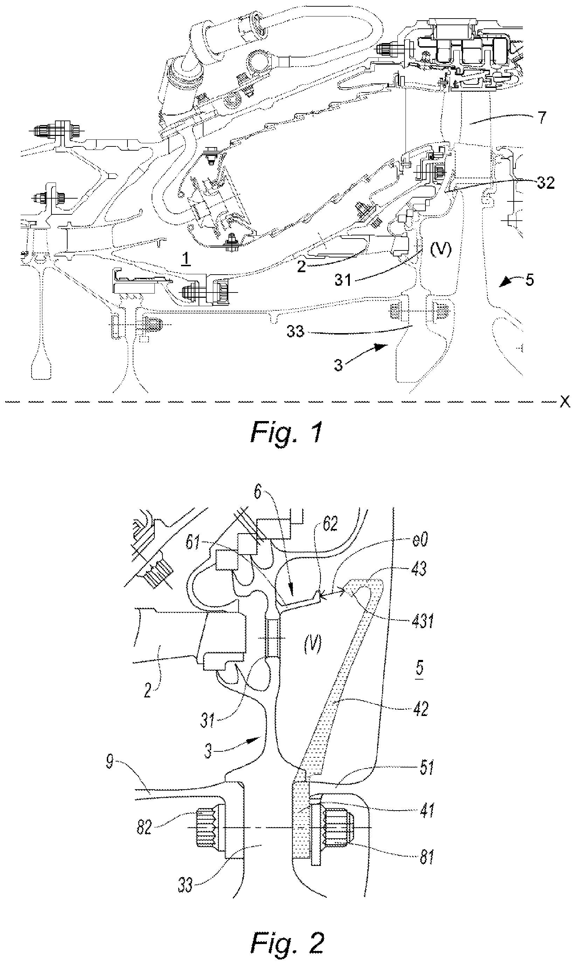

En référence à la figure 1 représentant le corps haute pression d'un turboréacteur selon l'art antérieur vu en demi-coupe axiale, on ménage dans le moteur un circuit de refroidissement dans lequel un flux d'air, prélevé en amont de la chambre de combustion 1, est introduit dans un volume de refroidissement V ménagé entre la surface aval d'un disque d'étanchéité 3 et la surface amont d'un rotor de turbine HP 5.

Le disque d'étanchéité 3 dont la fonction est d'assurer l'étanchéité entre le rotor et le stator à l'amont de la turbine est désigné communément disque labyrinthe. Il se présente sous la forme d'une pièce annulaire solidaire d'un disque de turbine du rotor de turbine HP 5 par son bord radialement intérieur, dit bord de fixation 33. Le disque d'étanchéité 3 est précontraint axialement de manière à ce que son bord radialement extérieur, dit bord d'appui 32, soit en appui contre la surface amont de la jante du rotor de turbine HP 5. Le disque d'étanchéité 3 comporte en outre une pluralité d'orifices de ventilation 31 disposés annulairement et agencés pour permettre l'introduction d'un flux d'air de refroidissement entre le disque d'étanchéité 3 et le disque de turbine HP.

Un injecteur d'air 2 prélève un flux d'air contournant la chambre de combustion 1 et l'introduit dans le volume de refroidissement V via les orifices de ventilation 31 ménagés dans le disque d'étanchéité 3 ; le flux d'air de refroidissement est ensuite distribué dans le circuit de refroidissement du rotor de turbine 5 comprenant les plateformes et les aubes 7 montés sur le disque de turbine du rotor de turbine 5.

Les orifices de ventilation 31 du disque d'étanchéité 3 sont ménagés de manière à autoriser un débit d'air suffisant pour refroidir le disque de turbine HP lorsque le moteur fonctionne à plein régime, en particulier lors de la phase de décollage de l'aéronef, et que la température des gaz est la plus élevée.

En régime de croisière, la température des gaz est moins élevée et les besoins en air de refroidissement sont moindres. Comme le débit d'air de refroidissement fourni par l'injecteur d'air 2 n'est pas régulé, le disque de turbine HP est refroidi de manière excessive en régime de croisière.

Pour limiter le gaspillage d'air de refroidissement et réduire la consommation spécifique de carburant, il a été proposé un circuit de refroidissement, reliant le fond de la chambre de combustion 1 au volume de refroidissement V. Il comprend une vanne de régulation du débit d'air dont l'ouverture est commandée en fonction du régime du moteur. Une telle vanne permettrait de réguler le débit du flux d'air de refroidissement dans le volume de refroidissement V.

Cependant, un tel dispositif présente de nombreux inconvénients. Tout d'abord, en termes d'encombrement, il est difficile de ménager un espace suffisant dans le moteur pour monter la vanne de régulation. Celle-ci devrait être installée à l'extérieur du moteur. Il serait alors nécessaire de modifier la structure du moteur en prévoyant, par exemple, des pales de redresseur creuses pour permettre la réintroduction de l'air dans le moteur et un moyen de guidage sous la chambre en direction du volume de refroidissement V. Enfin, en termes de fiabilité, une défaillance de la vanne pourrait entraîner un refroidissement insuffisant de la turbine HP et la destruction du moteur.

Le document US 3,575,528 A1 décrit un système de refroidissement de turbines de rotor comprenant une bague bimétallique formant une valve agencée pour bloquer un passage d'air.

L'invention a donc pour objectif la réalisation d'un moyen pour commander le débit d'air de refroidissement et plus généralement le débit d'un fluide dans une turbomachine, en fonction d'une vitesse de rotation de la turbomachine.

L'invention concerne donc un élément de rotor de turbomachine comportant une portion de surface annulaire autour de l'axe de rotation du rotor et un passage de fluide ménagé à travers ladite portion de surface.

L'élément de rotor est caractérisé par le fait qu'il comporte un moyen d'obturation dudit passage, ledit moyen d'obturation comprenant un élément d'obturation déformable en fonction de la vitesse de rotation du rotor et étant agencé pour réguler le débit de fluide en fonction de la vitesse de rotation du rotor.

En disposant un moyen de commande de fluide au niveau du rotor on utilise au mieux l'espace disponible dans la machine et on s'affranchit de la nécessité de trouver une place à une vanne.

Un tel système est fiable car il ne nécessite pas de système de commande externe susceptible de défaillir. En outre, il peut avantageusement être adapté sur des turbomachines existantes, sans nécessiter de modifications structurelles importantes.

Selon un mode de réalisation, l'élément d'obturation est de forme annulaire et comprend une partie de fixation, un corps déformable de forme évasée et une partie d'obturation.

On utilise ainsi la différence entre les efforts centrifuges aux différents régimes de fonctionnement de la turbomachine pour agir directement sur l'élément d'obturation et réaliser un ensemble très compact.

Avantageusement, l'élément de rotor comporte une virole annulaire avec un bord libre coopérant avec ledit élément d'obturation pour former ledit moyen d'obturation, le bord libre de la virole annulaire formant avec la partie d'obturation de l'élément d'obturation un diaphragme obturant le passage de fluide. Plus particulièrement, la partie d'obturation est de forme cylindrique et ledit bord libre de la virole est en forme de léchette, le diaphragme étant défini par l'ouverture ménagée entre la partie d'obturation cylindrique et la léchette.

Conformément à une autre caractéristique de l'invention, l'élément d'obturation est réalisé dans un alliage à mémoire de forme. L'emploi d'un alliage à mémoire de forme est particulièrement avantageux dans la mesure où il présente généralement un domaine d'élasticité plus étendu que les autres alliages métalliques. En étant utilisé, dans cette application, sur une fraction seulement de son domaine d'élasticité, il est soumis à une fatigue moindre et sa durée de vie est a priori plus élevée que pour un autre métal.

L'invention porte également sur une turbomachine comprenant un élément de rotor tel que revendiqué.

L'invention s'applique ainsi à une turbomachine comprenant un rotor de turbine avec un disque de turbine et un disque d'étanchéité, le disque d'étanchéité comportant au moins un passage pour le fluide de refroidissement du disque de turbine et formant ledit élément de rotor avec ledit moyen d'obturation pour le fluide de refroidissement du disque de turbine.

Notamment, on met à profit la différence de vitesse de rotation de l'ordre de 10% entre le régime de croisière et le plein régime pour réguler le débit d'air de refroidissement. Ainsi le moyen d'obturation assure un passage de fluide d'ouverture déterminée à une première vitesse de rotation du rotor de turbine, dite de plein régime. Le moyen d'obturation assure également un passage de fluide d'ouverture minimale à une seconde vitesse de rotation du rotor de turbine, dite de croisière, inférieure à la première vitesse.

La solution de l'invention permet enfin au moyen d'obturation d'assurer un passage de fluide d'ouverture maximale à vitesse de rotation du rotor de turbine nulle.

L'invention sera mieux comprise à l'aide du dessin annexé sur lequel :
- la figure 1 représente une vue en demi coupe axiale du corps haute pression d'une turbomachine selon l'art antérieur ;
- les figures 2, 3 et 4 représentent un élément d'obturation, monté entre un disque de turbine et un disque d'étanchéité d'un rotor de turbine d'une turbomachine selon l'invention,
- la figure 2 représente plus particulièrement la position de l'élément d'obturation lorsque la vitesse du rotor est nulle (moteur à l'arrêt) ;

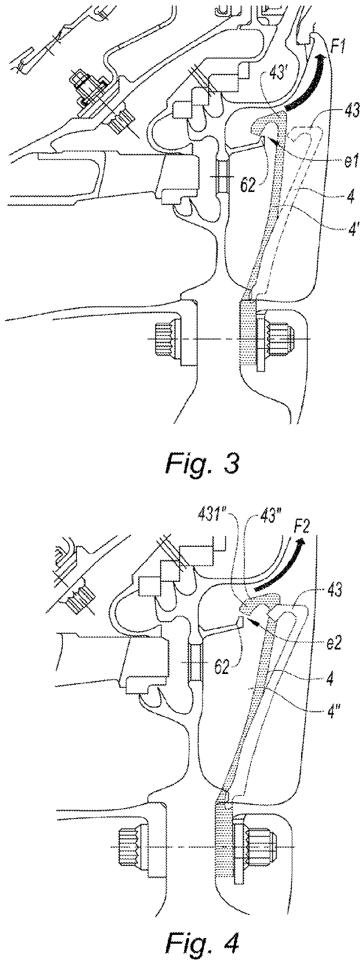

- la figure 3 représente plus particulièrement la position de l'élément d'obturation lorsque la vitesse du rotor est importante (plein régime),
- la figure 4 représente plus particulièrement la position de l'élément d'obturation lorsque la vitesse du rotor est réduite (régime de croisière) et

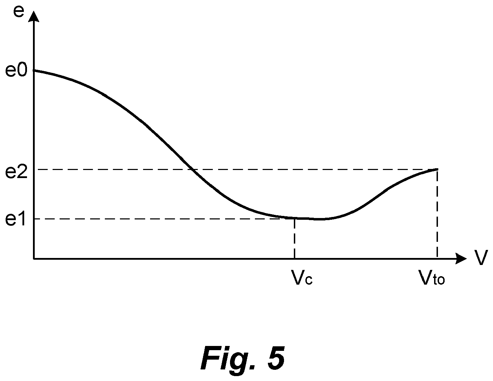

- la figure 5 représente une courbe représentant l'ouverture du diaphragme en fonction de la vitesse de rotation du rotor de turbine.

En référence à la figure 1, on voit la représentation du corps à haute pression HP, d'une turbomachine telle qu'un turboréacteur à double corps. Ce dernier, tel qu'expliqué plus haut, comprend un corps à basse pression, dit corps BP, et un corps à haute pression, dit corps HP.

En référence à la figure 2, représentant la solution de l'invention appliquée au refroidissement du rotor de turbine HP d'un moteur à turbine à gaz, un élément d'obturation 4 est monté entre un disque de turbine HP du rotor de turbine HP et l'élément de rotor que constitue le disque d'étanchéité. Il est solidaire de ces derniers en rotation.

Le rotor de turbine HP 5 comprend un disque de turbine se présentant sous la forme d'une pièce annulaire et qui s'étend transversalement à l'axe X du moteur comme représenté sur la figure 1. Le disque de turbine HP comprend un alésage axial dans lequel s'étend un arbre d'entraînement du corps BP non représenté. Le bord radialement extérieur du disque de turbine HP comprend des aubes de turbine 7 montées dans des logements ménagés à la périphérie du disque de turbine HP, les aubes 7 s'étendant radialement vers l'extérieur comme représenté sur la figure 1.

Le disque de turbine HP comprend une bride de fixation amont 51 se présentant sous la forme d'une virole dont la concavité est tournée vers l'intérieur, c'est-à-dire vers l'axe du moteur X. La bride de fixation amont 51 du disque de turbine HP 5 comprend une pluralité d'orifices longitudinaux de fixation qui sont uniformément répartis annulairement. La bride de fixation amont 51 du disque de turbine HP permet de relier le disque de turbine HP à un élément 9 du corps de turbine HP en forme de tambour relié au compresseur HP et à l'élément d'obturation 4.

Le disque d'étanchéité 3 se présente sous la forme d'un disque annulaire, sensiblement évasé de l'amont vers l'aval, s'étendant transversalement à l'axe X du moteur et relié à l'élément 9 du corps de turbine HP du moteur. Le disque d'étanchéité 3 est monté en amont du disque de turbine HP et est solidaire de ce dernier en rotation.

Le disque d'étanchéité 3 comprend des lamelles radiales, communément désignées par l'homme du métier sous la désignation « léchettes », agencées pour correspondre avec un élément abrable fixé sur le carter du moteur et former un joint d'étanchéité à labyrinthe entre le disque d'étanchéité 3 et le carter du moteur au cours de la rotation du disque d'étanchéité 3 avec le corps HP 9, empêchant la propagation dans le moteur d'un flux d'air chaud issu de la chambre de combustion.

Le disque d'étanchéité 3 comprend une partie de fixation radiale 33, radialement intérieure, reliée en amont de l'élément 9 du corps de turbine HP et en aval au disque de turbine HP, et une partie d'appui 32, radialement extérieure, en appui sur la surface amont du disque de turbine HP. Le disque d'étanchéité 3 est précontraint axialement de manière à ce que sa partie d'appui 32 exerce une force de maintien sur le disque de turbine HP, empêchant en particulier le déplacement des aubes 7 dans les logements ménagés à la périphérie du disque de turbine HP.

Le disque d'étanchéité 3 comprend une portion de surface annulaire autour de l'axe de rotation du rotor dans laquelle est ménagée une pluralité d'orifices longitudinaux de ventilation 31, uniformément répartis, agencée pour permettre l'introduction d'un flux d'air de refroidissement entre le disque d'étanchéité 3 et le disque de turbine HP. Un injecteur d'air 2, placé en amont des orifices de ventilation 31 du disque d'étanchéité 3, permet d'injecter de l'air frais contournant la chambre de combustion du moteur. Les orifices de ventilation 31 forment un passage de fluide de refroidissement dans le disque d'étanchéité 3. La partie de fixation radiale 33 du disque d'étanchéité 3 comprend une pluralité d'orifices longitudinaux de fixation, uniformément répartis annulairement, agencés pour correspondre avec les orifices de fixation du disque de turbine HP 5.

Selon l'invention, en référence à la figure 2, la turbomachine comprend un élément 4 d'obturation du passage d'introduction du flux d'air de refroidissement entre le disque d'étanchéité 3 et le disque de turbine HP.

L'élément d'obturation 4 se présente sous la forme d'un disque annulaire 4, ou flasque, monté transversalement à l'axe X du moteur, entre le disque d'étanchéité 3 et le disque de turbine HP. L'élément d'obturation 4 est monté solidaire des disques d'étanchéité 3 et de turbine HP. En position de repos, lorsque le moteur est à l'arrêt, l'élément d'obturation 4 est sensiblement évasé de l'amont vers l'aval. L'élément d'obturation 4 comprend une partie radiale de fixation 41 radialement intérieure, dans laquelle sont ménagés des orifices de fixation longitudinaux uniformément répartis annulairement, une partie libre d'obturation 43, radialement extérieure, se présentant sous la forme d'une surface cylindrique avec un rebord 431 annulaire tourné vers l'intérieur et une partie tronconique 42 reliant sa partie de fixation 41 à sa partie libre d'obturation 43 comme représenté sur la figure 2.

Toujours en référence à la figure 2, l'élément d'obturation 4 est monté de manière solidaire avec le disque d'étanchéité 3 et le disque de turbine HP. Des boulons 82 traversent successivement, d'amont en aval, des orifices de fixation du tambour 9 du corps HP du moteur, les orifices de fixation du disque d'étanchéité 3, les orifices de fixation de l'élément d'obturation 4 et les orifices de fixation du disque de turbine HP 5. Les boulons 82 coopèrent à leur extrémité avec des écrous 81.

L'élément d'obturation 4 est ici formé en un alliage à mémoire de forme (AMF), connu en soi. Les principaux alliages à mémoire de forme, comprennent des alliages de nickel et de titane, de préférence, en proportions égales. Un alliage à mémoire de forme (AMF) présente l'intérêt d'avoir un domaine de déformation élastique étendu. En étant utilisé sur une partie seulement de son domaine d'élasticité, il est relativement peu soumis aux cycles de fatigue. Sa durée de vie est donc plus grande en comparaison à un autre métal dont l'étendue du domaine d'élasticité est plus réduite.

Lorsque la turbomachine est en rotation, l'élément d'obturation 4 est soumis aux efforts centrifuges et est conformé pour se déformer de manière élastique. La partie tronconique 42 de l'élément d'obturation 4, sensiblement évasée ici de l'amont vers l'aval au repos, se déforme sous l'effet de la force centrifuge de manière à ce que sa partie d'obturation libre 43 se déplace vers l'amont. La partie d'obturation 43 de l'élément d'obturation 4 vient obturer partiellement le passage du flux d'air de refroidissement dans le moteur, c'est-à-dire le passage délimité par les orifices de ventilation 31 formés dans le disque d'étanchéité 3. Autrement dit, au fur et à mesure que la vitesse de rotation du moteur (vitesse du rotor de turbine HP 5) augmente, sous l'effet de la force centrifuge, l'élément d'obturation 4 se redresse dans un plan transversal à l'axe X du moteur. Ainsi, en fonction de la vitesse de rotation du moteur, le passage est plus ou moins obturé par ledit élément d'obturation 4, régulant ainsi le débit du flux d'air de refroidissement.

En référence à la figure 2, dans une forme de réalisation préférée de l'invention, le disque d'étanchéité 3 comprend une virole d'obturation 6, ou seuil, ménagée sur sa face aval, s'étendant sensiblement longitudinalement vers l'aval. La virole d'obturation 6 comporte un corps cylindrique longitudinal 61 dont l'extrémité amont est reliée à la face aval du disque d'étanchéité 3 et dont l'extrémité aval libre est terminée par une léchette annulaire radialement extérieure 62 agencée pour coopérer avec l'élément d'obturation 4.

Toujours en référence à la figure 2, la virole annulaire d'obturation 6 est ménagée à une distance radiale supérieure de celle des orifices de ventilation 31 du disque d'étanchéité 3. De ce fait, lorsque l'injecteur d'air 2 introduit un flux d'air de refroidissement entre le disque d'étanchéité 3 et le disque de turbine HP, via les orifices de ventilation 31, le flux d'air circule entre l'extrémité libre de la virole annulaire d'obturation 6 et la partie libre d'obturation 43 de l'élément d'obturation 4 avant d'atteindre le disque de turbine HP et circuler, par exemple, entre le pieds des aubes 7 et leurs logements ménagés à la périphérie du disque de turbine HP.

La virole annulaire 6 coopère avec la partie libre d'obturation 43 pour former un moyen d'obturation du passage du fluide de refroidissement, le bord libre 62 de la virole annulaire 6 formant avec la partie d'obturation 43 de l'élément d'obturation 4 un diaphragme obturant le passage de fluide 31.

La distance entre l'extrémité libre 62 de la virole d'obturation 6 et la partie libre 43 de l'élément d'obturation 4 est désignée par la suite « ouverture du diaphragme ». Plus l'ouverture du diaphragme (e) est importante, plus le débit du flux d'air de refroidissement est important. Autrement dit, l'ouverture du diaphragme permet de réguler le débit du flux d'air de refroidissement.

La déformation de l'élément d'obturation 4, en fonction de la vitesse de rotation du rotor de turbine HP 5, permet de paramétrer l'ouverture du diaphragme et, par conséquence, le débit du flux d'air de refroidissement.

En référence à la figure 2, représentant la position de l'élément d'obturation 4 lorsque le moteur est à l'arrêt, c'est-à-dire en position de repos, l'ouverture du diaphragme e0 est importante, permettant ainsi un refroidissement important du disque de turbine HP.

La figure 3 représente deux positions différentes de l'élément d'obturation 4. Dans un souci de clarté, la position de l'élément d'obturation est référencée 4 en position de repos et 4' lorsque le moteur tourne avec une vitesse élevée (14000 rpm), par exemple, à plein régime lors d'une phase de décollage.

A plein régime, l'élément d'obturation 4' se redresse radialement sous l'effet de la force centrifuge générée par le moteur et se place à proximité de l'extrémité libre de la virole d'obturation 6. Autrement dit, au cours du décollage, la léchette 62 de la virole d'obturation 6 vient se placer dans la cavité de la partie cylindrique 43' de l'élément d'obturation 4', le flux d'air circulant entre la surface externe de la léchette 62 et la surface interne de la partie cylindrique de l'extrémité libre 43'.

L'ouverture du diaphragme e1 entre la léchette 62 de la virole d'obturation 6 et l'extrémité libre 43' de l'élément d'obturation 4' est plus faible que lorsque le moteur est au repos mais suffisante pour permettre le refroidissement du disque de turbine HP. Un flux d'air de refroidissement F1, de débit important, circule en amont de l'élément d'obturation 4'.

De manière avantageuse, la partie libre d'obturation 43 de l'élément d'obturation 4 et la léchette 62 de la virole d'obturation 6 sont formées de manière à ménager une ouverture du diaphragme e2 déterminée pour une vitesse de rotation du rotor de turbine HP 5 prédéterminée, correspondant à la vitesse de rotation à plein régime du moteur lors du décollage, par exemple 14000 rpm. Il va de soi que diverses formes de viroles/seuils d'obturation 6 ou d'éléments d'obturation 4 permettraient de remplir cette fonction de diaphragme.

La figure 4 représente deux positions différentes de l'élément d'obturation 4. Dans un souci de clarté, la position de l'élément d'obturation est référencée 4 en position de repos et 4" lorsque le moteur fonctionne en régime de croisière (12800 rpm), c'est-à-dire pour une vitesse de rotation (Vc) inférieure à la vitesse de rotation (Vto) en plein régime.

En régime de croisière, l'élément d'obturation 4" se déplace vers l'aval par rapport à sa position à plein régime, la force centrifuge générée par le moteur étant moins importante que lors du décollage. La léchette 62 de la virole d'obturation 6 vient se placer dans l'alignement du rebord 431" de la partie d'obturation 43" de l'élément d'obturation 4" comme représenté sur la figure 4, le passage d'introduction d'air étant alors partiellement obturé ou diaphragmé.

En régime de croisière (Vc), l'élément d'obturation 4" est très proche de l'extrémité libre 62 de la virole d'obturation 6. L'ouverture du diaphragme e2 entre l'extrémité libre 62 de la virole d'obturation 6 et l'extrémité libre 43" de l'élément d'obturation 4" est plus faible que lors du décollage. Ainsi, le débit du flux d'air de refroidissement F2 qui circule en amont de l'élément d'obturation 4"est plus faible par comparaison au décollage (Vto). En pratique, la partie libre 43 de l'élément d'obturation 4 se déplace d'une distance de 4mm entre sa position de décollage et sa position de croisière.

En référence à la figure 5, la déformation de l'élément d'obturation 4 permet de modifier l'ouverture du diaphragme e en fonction de la vitesse de rotation du moteur. Cela permet avantageusement de réguler le débit d'air de refroidissement en fonction des besoins du moteur.

Enfin, en ce qui concerne la fiabilité du moteur, en cas de défaillance de l'élément d'obturation 4, celui-ci restera en position déformée maximale (en position de décollage) comme représenté sur la figure 3, autorisant un débit d'air de refroidissement important.

## Revendications

1. Elément de rotor (3) de turbomachine comportant une portion de surface annulaire autour de l'axe de rotation du rotor, un passage de fluide (31) étant ménagé à travers ladite portion de surface, **caractérisé par le fait qu'**il comporte un moyen d'obturation dudit passage (31), ledit moyen comprenant un élément (4) d'obturation, déformable en fonction de la vitesse de rotation du rotor, et conformé pour se déformer de manière élastique lorsqu'il est soumis à des efforts centrifuges, agencé pour réguler le débit de fluide en fonction de la vitesse de rotation du rotor, l'élément d'obturation (4) étant de forme annulaire, et comprenant une partie de fixation (41) radialement intérieure de l'élément (4) d'obturation à un bord de fixation (33) radialement intérieur de l'élément de rotor (3), un corps déformable de forme évasée (42) et une partie d'obturation (43) radialement extérieure, ledit corps déformable (42) reliant ladite partie de fixation (41) à ladite partie d'obturation (43); **caractérisé en ce que** le moyen d'obturation comporte une virole annulaire (6) ménagée à une distance radiale supérieure à celle du passage de fluide (31), avec un bord libre en forme de léchette (62) coopérant avec ledit élément d'obturation (4) pour former ledit moyen d'obturation, la partie d'obturation (43) étant de forme cylindrique, le bord libre (62) de la virole annulaire (6) formant avec la partie d'obturation (43) de l'élément d'obturation (4) un diaphragme obturant le passage de fluide (31), le diaphragme étant défini par l'ouverture (e) ménagée entre la partie d'obturation cylindrique (43) et la léchette (62).

2. Elément de rotor (3) selon la revendication précédente dont l'élément d'obturation (4) est réalisé dans un alliage à mémoire de forme.

3. Turbomachine comprenant un élément de rotor (3) selon l'une des revendications précédentes.

4. Turbomachine selon la revendication précédente comprenant un rotor de turbine (5) avec un disque de turbine et un disque d'étanchéité (3), le disque d'étanchéité (3) comportant au moins un passage (31) pour le fluide de refroidissement du disque de turbine et formant ledit élément de rotor avec ledit moyen d'obturation pour le fluide de refroidissement du disque de turbine.

5. Turbomachine selon la revendication précédente dont le moyen d'obturation assure un passage de fluide d'ouverture déterminée (e2) à une première vitesse de rotation du rotor de turbine (Vto), dite de plein régime.

6. Turbomachine selon la revendication précédente dont le moyen d'obturation assure un passage de fluide d'ouverture minimale (e1) à une seconde vitesse de rotation du rotor de turbine (Vc), dite de croisière, inférieure à la première vitesse (Vto).

7. Turbomachine selon la revendication précédente dont le moyen d'obturation assure un passage de fluide d'ouverture maximale à vitesse de rotation du rotor de turbine nulle.

## Patentansprüche

1. Rotorelement (3) eines Turbotriebwerks, umfassend einen ringförmigen Flächenabschnitt um die Drehachse des Rotors, wobei ein Fluiddurchgang (31) durch den Flächenabschnitt vorgesehen ist, **dadurch gekennzeichnet, dass** es ein Verschlussmittel des Durchgangs (31) umfasst, wobei das Mittel ein Verschlusselement (4) umfasst, das in Abhängigkeit von der Drehgeschwindigkeit des Rotors verformbar und dazu vorgesehen ist, sich elastisch zu verformen, wenn es Fliehkräften ausgesetzt ist, das dazu vorgesehen ist, die Fluiddurchgangsmenge in Abhängigkeit von der Drehgeschwindigkeit des Rotors zu regulieren, wobei das Verschlusselement (4) ringförmig ist, und umfassend ein radial inneres Teil (41) zur Befestigung des Verschlusselements (4) an einem radial inneren Befestigungsrand (33) des Rotorelements (3), einen verformbaren Körper von erweiterter Form (42) und ein radial äußeres Verschlussteil (43), wobei der verformbare Körper (42) das Befestigungsteil (41) mit dem Verschlussteil (43) verbindet, **dadurch gekennzeichnet, dass** das Verschlussmittel eine ringförmige Halterung (6) umfasst, die in einem Radialabstand größer als jener des Fluiddurchgangs (31) vorgesehen ist, mit einem freien Rand in Form einer Zunge (62), die mit dem Verschlusselement (4) zusammenwirkt, um das Verschlussmittel zu schließen, wobei das Verschlussteil (43) von zylindrischer Form ist, wobei der freie Rand (62) der ringförmigen Halterung (6) mit dem Verschlussteil (43) des Verschlusselements (4) eine Membran bildet, die den Fluiddurchgang (31) verschließt, wobei die Membran durch die Öffnung (e) definiert ist, die zwischen dem zylindrischen Verschlussteil (43) und der Zunge (62) ausgenommen ist.

2. Rotorelement (3) nach dem vorhergehenden Anspruch, dessen Verschlusselement (4) aus einer Legierung mit Formgedächtnis hergestellt ist.

3. Turbotriebwerk, umfassend ein Rotorelement (3) nach einem der vorhergehenden Ansprüche.

4. Turbotriebwerk nach dem vorhergehenden Anspruch, umfassend einen Turbinenrotor (5) mit einer Turbinenscheibe und einer Dichtungsscheibe (3), wobei die Dichtungsscheibe (3) mindestens einen Durchgang (31) für das Kühlfluid der Turbinenscheibe umfasst und das Rotorelement mit dem Verschlussmittel für das Kühlfluid der Turbinenscheibe bildet.

5. Turbotriebwerk nach dem vorhergehenden Anspruch, dessen Verschlussmittel einen Fluiddurchgang mit bestimmter Öffnung (e2) bei einer ersten Drehgeschwindigkeit des Turbinenrotors (Vto), auf Vollbetrieb genannt, gewährleistet.

6. Turbotriebwerk nach dem vorhergehenden Anspruch, dessen Verschlussmittel einen Fluiddurchgang mit minimaler Öffnung (e1) bei einer zweiten Drehgeschwindigkeit des Turbinenrotors (Vc), Normalbetrieb genannt, die geringer als die erste Geschwindigkeit (Vto) ist, gewährleistet.

7. Turbotriebwerk nach dem vorhergehenden Anspruch, dessen Verschlussmittel einen Fluiddurchgang mit maximaler Öffnung bei einer Drehgeschwindigkeit des Turbinenrotors gleich Null gewährleistet.

## Claims

1. A rotor element (3) of a turbine engine comprising an annular surface portion about the rotation axis of the rotor, a fluid passageway (31) being arranged through said surface portion, **characterised in that** it comprises a means for closing said passageway (31), said means comprising a closing element (4), that can be deformed depending on the rotation speed of the rotor, and designed to become elastically deformed when subjected to centrifugal stresses, arranged to regulate the fluid flow depending on the rotation speed of the rotor, the closing element (4) being of annular shape, and comprising a radially interior attachment portion (41) of the closing element (4) at a radially interior attachment edge (33) of the rotor element (3), a deformable body of tapered shape (42) and a radially exterior closing portion (43), said deformable body (42) connecting said attachment portion (41) to said closing portion (43); **characterised in that** the closing means comprises an annual shroud (6) arranged at a radial distance greater than that of the fluid passageway (31), with a free edge in the form of a lip (62) interacting with said closing element (4) in order to form said closing means, the closing portion (43) being of cylindrical shape, the free edge (62) of the annular shroud (6) forming with the closing portion (43) of the closing element (4) a diaphragm closing the fluid passageway (31), the diaphragm being defined by the aperture (e) arranged between the cylindrical closing portion (43) and the lip (62).

2. A rotor element (3) as claimed in the preceding claim, wherein the closing element (4) is made of a shape-memory alloy.

3. A turbine engine comprising a rotor element (3) as claimed in one of the preceding claims.

4. A turbine engine as claimed in the preceding claim, comprising a turbine rotor (5) with a turbine disc and a sealing disc (3), the sealing disc (3) comprising at least one passageway (31) for the fluid for cooling the turbine disc and forming said rotor element with said closing means for the fluid for cooling the turbine disc.

5. A turbine engine as claimed in the preceding claim, wherein the closing means provides a fluid passageway of determined aperture (e2) at a first rotation speed (Vto) of the turbine rotor, called full speed.

6. A turbine engine as claimed in the preceding claim, wherein the closing means provides a fluid passageway of minimal aperture (e1) at a second rotation speed (Vc) of the turbine rotor, called cruising speed, that is less than the first speed (Vto).

7. A turbine engine as claimed in the preceding claim, wherein the closing means provides a fluid passageway of maximal aperture at zero rotation speed of the turbine rotor.
